(19) Europäisches Patentamt
European Patent Office
Office européen des brevets

(11) EP 0 614 472 B1

(12) **EUROPEAN PATENT SPECIFICATION**

(45) Date of publication and mention of the grant of the patent:
**28.07.1999 Bulletin 1999/30**

(21) Application number: **92921740.4**

(22) Date of filing: **13.10.1992**

(51) Int Cl.6: **C08J 3/24**, C09J 7/02, C09J 123/18

(86) International application number:
**PCT/US92/08710**

(87) International publication number:
**WO 93/11184 (10.06.1993 Gazette 1993/14)**

(54) **RADIATION CURABLE SATURATED POLYOLEFIN PRESSURE-SENSITIVE ADHESIVE**

STRAHLENHAERTBARER, DRUCKEMPFINDLICHER KLEBSTOFF AUF DER BASIS GESAETTIGTER POLYOLEFINE

ADHESIF AUTOCOLLANT A POLYOLEFINE SATUREE, DURCISSABLE PAR RAYONNEMENT

(84) Designated Contracting States:
**CH DE ES FR GB IT LI NL SE**

(30) Priority: **27.11.1991 US 799118**

(43) Date of publication of application:
**14.09.1994 Bulletin 1994/37**

(73) Proprietor: **MINNESOTA MINING AND MANUFACTURING COMPANY**
**St. Paul, Minnesota 55133-3427 (US)**

(72) Inventors:
- **BABU, Gaddam, N.**
  **Saint Paul, MN 55133-3427 (US)**
- **PETERSON, James, R.**
  **Saint Paul, MN 55133-3427 (US)**

(74) Representative: **Baillie, Iain Cameron et al**
**c/o Ladas & Parry**
**52-54 High Holborn**
**London WC1V 6RR (GB)**

(56) References cited:
**EP-A- 0 416 921**
**US-A- 4 288 358**
**US-A- 4 990 585**

- **Encyclopedia of Polymer Science and Engineering, vol. 9, 1987, John Wiley & Sons, New York, p.713**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### FIELD OF THE INVENTION

This invention relates to radiation curable poly(α-olefin) pressure-sensitive adhesive compositions. The invention relates particularly to radiation curable poly(α-olefin) pressure-sensitive adhesive compositions having improved resistance to oxidative degradation and superior cohesive strength particularly at elevated temperatures, without use of tackifiers, and to laminated structures made therefrom.

### BACKGROUND OF THE INVENTION

A continuing need in the pressure-sensitive adhesive (PSA) art is achievement of better control over various mechanical and process properties so that adhesives can be "tailor-made" for specific, highly demanding end-use applications such as packaging, medical, and masking tapes. These applications require a proper balance of properties, and this balance changes with the particular end-use.

Among the earliest polymers to provide a reasonable balance of the properties required for satisfactory PSA performance were the natural and synthetic rubbers. However, these PSAs had poor aging properties, and the art quickly recognized the need to eliminate ethylenically-unsaturated groups from the polymer backbone of rubber adhesives in order to improve their oxidative stability.

With the discovery of ZN catalysts, it became possible to polymerize α-olefin monomers to high molecular weight. The homopolymers of the $C_6$-$C_{10}$ α-olefins were naturally tacky and therefore good candidates for PSAs since they also had low toxicity, good aging and favorable environmental stability (i.e., low oxidation). These homopolymers were chemically inert, resistant to plasticizer migration, and relatively inexpensive. However, they had poor cohesive strength and therefore lacked characteristics necessary for use at elevated temperatures.

Radiation curing has been frequently used to chemically crosslink the polymeric component of adhesives in attempts to increase the cohesive strength of coated adhesive films. The results have been unsatisfactory because competing crosslinking and degradation (chain scission) reactions occur simultaneously. Therefore, in some PSA systems, especially those formulated from polymers containing propylene, radiation curing leads to a loss of cohesive strength and shear adhesion.

Adhesives derived primarily from $C_6$ or larger α-olefins are well known in the art. U.S. Patent No. 3,542,717 describes poly(α-olefin) adhesive compositions comprising mixtures of polyolefin copolymers derived from olefin monomers with different molecular weights (i.e., olefins having 11-20 carbon atoms, and different α-olefins having 4-20 carbon atoms). The resulting adhesive has high shear and peel adhesion at room temperature, but at high temperatures cohesive strength and shear adhesion are unacceptably low for most applications.

U.S. Patent No. 3,635,755 describes PSA polyolefins suitable for use as single component PSAs for surgical tapes that are substantially non-allergenic. Such adhesives can be made from homopolymers of the $C_6$ to $C_{11}$ α-olefins or from interpolymers of $C_2$ to $C_{16}$ α-olefins having an intrinsic viscosity of 1.5 to 7.0, a Williams' plasticity of 0.8 to 4.0, and an acetone/heptane soluble fraction of less than 25% by weight. Tapes made from these adhesives have low shear adhesions that facilitate non-irritating removal from the skin. However, this low shear adhesion is unsuitable, for example, for masking or packaging tape applications.

U.S. Patent Nos. 3,954,697 and 4,178,272 describe hot-melt adhesives useful for sealing polyethylene films derived from copolymers of propylene and $C_6$-$C_{10}$ α-olefins. The '697 patent teaches that while $C_6$ or $C_8$ α-olefin copolymers are permanently tacky, they have poor cohesive strength and consequently lack shear adhesion. Therefore the higher α-olefins must be copolymerized with propylene in order to meet "the critical property requirements for a pressure-sensitive adhesive material". One such a property, cohesive strength, is discussed in col. 1, lines 34-48. The copolymer must contain more than 40 mole % propylene, especially if static shear is to exceed 1000 minutes. The '272 patent describes compositions comprising a ZN catalyst system and discloses process conditions useful in preparing the "tacky" copolymers required for PSAs. Also disclosed are stereo-regulating three-component ZN catalyst systems that produce high molecular weight, crystalline block copolymers unsuitable for PSA applications (col. 2, lines 39-65), but are stated to be useful in sealing bags, cartons, and on an adhesive for floor tiles.

This approach is further advanced in U.S. Patent No. 4,288,358 which describes hot-melt adhesive compositions containing terpolymers of propylene, either 1-butene or 1-pentene, and $C_6$-$C_{10}$ α-olefins; tackifying resins; and plasticizing oils, in yet further efforts to simultaneously optimize the adhesive and process properties of these compositions.

While these references teach optimized processing conditions for preparation of hot melt adhesives that are readily coatable or extrudable at the melt temperature, these materials have poor PSA properties. In particular, they have poor adhesion under shear. To be useful, high temperature masking tapes used in the automotive industry must have good "shear adhesion" at elevated temperatures. Attempts to improve these propylene containing poly(α-olefin)

adhesives of the references by radiation crosslinking have led to a degradation of PSA properties, such as shear adhesion.

U.S. Patent Nos. 2,933,480 and 3,933,769 describe a process for copolymerizing mixtures of α-olefins and non-conjugated diolefins to yield sulfur-vulcanizable unsaturated elastomers described as "rubber-like" or "rubbery".

U.S. Patent No. 4,990,585 discloses hexene- ¼-methyl-pentene-1 random copolymer and process for producing the same. The polymer is useful as rubber vibration insulators, modifiers for plastics and rubbers and as adhesives.

U.S. Patent No. 5,112,882 describes adhesive tapes prepared using radiation curable poly(α-olefin) pressure-sensitive adhesive compositions having superior cohesive strength and shear adhesion. The polyene- and optional tackifier-containing compositions can have desirable peel adhesion, shear strength, and stability against oxidative degradation at low and moderate temperatures.

## SUMMARY OF THE INVENTION

Briefly, the present invention provides a radiation-curable α-olefin copolymer composition that comprises:

a) at least one copolymer of

1) 90.1 to 99.9 mole percent of one or more straight chain α-olefins having 2 to 32 carbon atoms of which at least 70% have 6 to 10 carbon atoms, and
2) 9.9 to 0.1 mole percent of one or more α-olefins having 6 to 32 carbon atoms including at least one methylidyne group present in a branched or cyclic group of carbon atoms;

wherein the copolymer has the general formula:

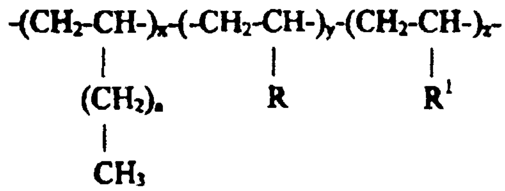

wherein

x, y, and z are numbers designating the relative molar amounts of monomer units comprising the backbone chain of the copolymer such that

(1) the sum (x + y + z) is 35 to 400,000, and
(2) z is 0.1 to 9.9%, y is 0 to 30%, and x is 64 to 99.9% of the sum (x + y + z);

a is an integer from 3 to 7, inclusive;
R is hydrogen or an alkyl group having 1 to 3 carbon atoms; and
$R^1$ is a monovalent organic group, having the structure

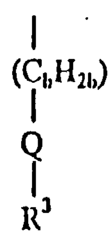

wherein

b is an integer from 1 to 5,

Q is a single bond, oxygen, or a divalent group selected from the class consisting of an arylene group having 6 to 15 carbon atoms and

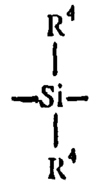

in which each $R^4$ is independently an alkyl group of 1 to 4 carbon atoms or $R^3$; and $R^3$ is a methylidyne group having the formula

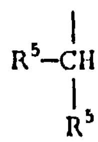

in which

(1) each $R^5$ is independently an alkyl group having 1 to 4 carbon atoms or
(2) both $R^5$s together provide an alkylene group that, with the methylidyne carbon to which they are attached, forms a 5- or 6-membered ring of carbon atoms,

with the proviso that b can be zero when Q is an arylene group;

b) sufficient photoactive crosslinking agent to crosslink said composition upon exposure to actinic radiation; and
c) optionally, a tackifying resin,

said composition being radiation curable to a pressure sensitive adhesive having peel adhesion of at least 35 N/dm when measured in accordance with ASTM D 3330-78 both in the presence and absence of said tackifying resin.

After curing, the composition provides a pressure-sensitive adhesive having peel adhesion of 35 N/dm or more and cohesive stability at temperatures above 120°C. The adhesive can be of particular use in tapes required for high temperature masking and hot melt adhesive applications.

Preferably, the polymer of the present invention has a glass transition temperature (Tg) in the range of -700C to 0°C, more preferably in the range of -60 to-20°C, and an inherent viscosity in the range of 0.4 to 9.0 dl/g, more preferably 0.5 to 6.0 dl/g, and most preferably 1.5 to 4.0 dl/g. Number average molecular weights of the polymers are in the range of 5,000 to 50,000,000, preferably 50,000 to 5,000,000.

The copolymers of the present invention do not contain residual ethylenic-unsaturation but do contain pendant side groups having readily reactive hydrogen atoms on tertiary carbon atoms that, on radiation, in the presence of the photoactive crosslinking agent, leads to crosslinking of the copolymer and thereby improved cohesive strength of the adhesive. Because ethylenic-unsaturation is not present in the copolymers, cured adhesives prepared from them have improved elevated temperature oxidative stability as well as excellent adhesion and chemical/electrical resistance, and they are physiologically inert. These properties make them excellent pressure-sensitive adhesives for a wide range of applications where it is desirable to have independent control of peel and shear adhesion.

It is believed that the background art does not teach PSA compositions comprising one or more poly(α-olefin) s which can be copolymers, including terpolymers, or tetrapolymers, derived from α-olefin monomers containing 6 to 10 carbon atoms and no polyenes and further comprising one or more photoactive crosslinking agents, the compositions having been radiation-cured to yield adhesive films having improved resistance to oxidative degradation as well as possessing substantial high temperature shear strength.

The present invention provides an α-olefin copolymer-containing pressure sensitive adhesive composition that is radiation curable. The α-olefin copolymer-containing adhesive composition can be cured to yield a PSA adhesive film with an improved balance of peel and shear adhesion. The peel and shear adhesion values are capable of being varied independently to achieve desired values. Adhesive layers of the invention preferably have peel values greater than 35 N/dm and resistance to oxidative degradation at temperatures up to at least 200°C. Radiation curing can be

achieved by ultraviolet or electron beam radiation.

The adhesive of the invention can be applied to appropriate substrate surfaces by a wide range of processes, i.e., solution coating, solution spraying, hot-melt extrusion, emulsion coating, etc., to make adhesive tapes, adhesive transfer films, and the like. Since the polyolefin composition of the invention is free of unsaturation either in the backbone or in pendent groups of the copolymer, the thermal stability of the compositions is superior to compositions containing polyolefins having unsaturation. Further, gelation during hot melt extrusion of the copolymer composition of the invention is minimal or does not occur.

As used in this invention:

"α-olefin copolymer" means a random polymer derived from two or more terminal monoethylenically-unsaturated monomers;
"straight-chain α-olefin" means a linear hydrocarbon having no branching and only one terminal ethylenic-unsaturation group and no other functional groups;
"α-olefin having at least one methylidyne group" means a hydrocarbon having only one terminal ethylenically-unsaturated group and no other functional groups and having pendant to the ethylenically-unsaturated group, a group having a carbon atom that is attached to three other carbon atoms and to a hydrogen atom;
"film" means a layer or a support and a self-supporting layer;
"photoactive crosslinking agent" means a compound which, under the influence of radiation, connects polymer chains and becomes incorporated therein; this increases the molecular weight of the adhesive and thus its cohesive strength without unduly affecting its compliance or other PSA properties; and
"actinic radiation" means electromagnetic radiation, preferably in the ultraviolet range.

## DETAILED DESCRIPTION OF PREFERRED EMBODIMENTS OF THE INVENTION

The radiation-curable α-olefin copolymers of the invention have general formula I:

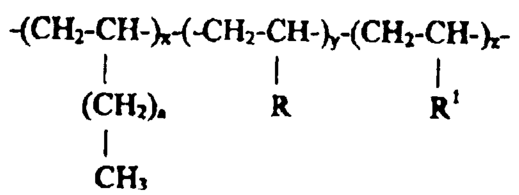

I

wherein

R is hydrogen or a lower alkyl group;
$R^1$ is a monovalent organic group that is free of ethylenic-unsaturation and contains at least one methylidyne group,

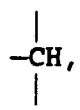

having 4 to 30, and preferably 4 to 18 carbon atoms, optionally containing an oxygen or silicon atom that is catenated between carbon atoms, and preferably having the structural formulae:

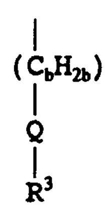

in which b is an integer having a value of 1 to 5; Q is a connecting linkage selected from a single bond, -O- and divalent groups selected from the group consisting of an arylene group having 6 to 15 carbon atoms and

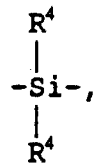

in which each $R^4$ is independently a lower alkyl group of 1 to 4 carbon atoms or $R^3$; and $R^3$ is a methylidyne group-containing group having the structural formula:

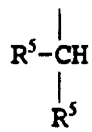

in which each $R^5$ is independently an alkyl group having 1 to 4 carbon atoms or both $R^5$s together provide an alkylene group forming with the methylidyne group to which it is attached a 5- or 6-membered ring of carbon atoms, with the provision that when Q is arylene b can also be zero;

a is an integer having a value of 3 to 7, inclusive;
x, y, and z are numbers designating the relative molar amounts of monomer units comprising the backbone chain of the copolymer, the sum of (x + y + z) being 35 to 400,000; z being 0.1 to 9.9% of the sum (x + y + z); y being 0 to 30% of the sum (x + y + z), and x being 64 to 99.9% preferably 90 to 98%, and most preferably 94 to 98% of the sum (x + y + z).

The copolymers of the invention are prepared by copolymerizing one or more straight chain α-olefins and one or more methylidyne group-containing α-olefins.

Straight chain α-olefins that can be used have six to ten carbon atoms, namely, 1-hexene, 1-heptene, 1-octene, 1-nonene, and 1-decene.

Optionally, up to 30 mole percent, preferably 1 to 10 mole percent of total α-olefins, of straight chain α-olefins having two to five carbon atoms can be used, namely, ethene, 1-propene, 1-butene, and 1-pentene.

Suitable methylidyne group-containing α-olefins that can be used have 6 to 20 or more carbon atoms including, 4-methyl-1-pentene,5-, and 4-methyl-1-hexene,ethenylcyclopentane,6-,5-, and 4-methyl-1-heptene, 4,5-dimethyl-1-hexene, 4-ethyl-1-hexene, ethenylcyclohexane, 7-methyl-1-octene, 8-methyl-1-nonene, 4,6-dimethyl-1-heptene, allylcyclohexane, 2-ethenylbicyclo[2.2.1]heptane (2-ethenylnorborane, this α-olefin has three methylidyne groups), 2-ethenyl-6-methylbicyclo[2.2.1]heptane (this α-olefin has four methylidyne groups), 2-(3-propenyl)bicyclo[2.2.1]heptane (propenylnorborane, this α-olefin has three methylidyne groups), 3-(3-propenyl)-2,6,6-trimethylbicyclo[3.1.1]heptane (3-propenylpinane, this α-olefin has four methylidyne groups), 1-ethenylpentacyclo[4.2.0.$0^{2,5}$.$0^{3,8}$.$0^{4,7}$]octane (ethenylcubane, this α-olefin has seven methylidyne groups), 1-ethenyltricyclo[3.3.1.$1^{3,7}$]decane (ethenyladamantane, this α-olefin has three methylidyne groups), and 1,2-dimethyl-5-ethenyltricyclo[3.3,1,$1^{3,7}$]decane (1,2-dimethyl-5-ethenyladamantane, this α-olefin has three methylidyne groups).

Other methylidyne group-containing α-olefins that are suitable for use in the copolymers of the invention are the arylene, the catenary oxygen, and the catenary silicon group-containing α-olefins, such as, for example: 4-(1-methylethyl)-1-(3-propenyl)benzene, 4-(2-methylpropyl)-1-(3-propenyl)benzene, 2-(1-methylethyl)-4-pentyl-3-propenylnaphthalene, 3-(2-methylpropoxy)-1-propene, 4-(2-methylpropoxy)-1-butene, 3-cyclohexoxy-1-propene, dimethyl(l-methylethyl)-3-propenylsilane, bis(l-methylethyl)methyl-3-propenylsilane, and bis(1-methylethyl)methyl-4-butenylsilane.

The α-olefins can be copolymerized in the presence of Ziegler-Natta (ZN) catalysts over a wide range of temperatures, e.g., 0 to 140°C, preferably 30 to 90°C. The polymerization can be done in bulk or in inert solvents. Suitable examples of inert solvents include, but are not limited to, aliphatic, aromatic, and cycloaliphatic hydrocarbon solvents, i.e., hexane, heptane, benzene, toluene, cyclopentane, and cyclohexane. The amount of catalyst used is preferably in the range of 0.1 to 5 grams per kilogram of monomer, more preferably 0.2 to 2 grams per kilogram of monomer. The copolymerization of α-olefins and polyene monomers is often slow and results in poor yields of polymer whereas the copolymerization of α-olefins and methylidyne- containing olefins goes rapidly and in excellent yield.

Use of ZN catalysts to make homopolymers from α-olefin monomers, and copolymers from mixtures of α-olefin and non-conjugated polyene monomers is old in the art and is not the subject of this invention. ZN polymerizations are summarized in Odian, G., "Principles of Polymerization", Ch. 8.4 (Second Edition, J. Wiley & Sons, New York, 1981). For a more detailed discussion of the polymerization of α-olefins, see Boor, J., "Ziegler-Natta Catalysts and Polymerizations", Ch. 19 (Academic Press, NY, 1979).

NMR analysis of the copolymers shows the absence of ethylenic-unsaturation. Useful copolymers can also be made by hydrogenation, by processes known in the art, of unsaturated poly($\alpha$-olefins).

Copolymers can be made from one or more straight chain $\alpha$-olefins and from 0.1 to 9.9 mole percent of one or more methylidyne group-containing $\alpha$-olefins. By varying the composition and ratios of these monomers, copolymers can be prepared that yield PSA films with peel, get content, and shear adhesive properties required for various specialized end-use applications.

Pressure-sensitive adhesive films can also be prepared by adding a photocrosslinking agent to the copolymer to form an adhesive composition, and coating the composition onto a substrate. Suitable photocrosslinking agents include, but are not limited to: aldehydes, such as benzaldehyde, acetaldehyde, and their substituted derivatives; ketones such as acetophenone, benzophenone and their substituted derivatives, particularly the 4-alkylbenzophenones wherein the alkyl group has 1 to 18 carbon atoms such as methyl, ethyl, butyl, octyl, dodecyl and octadecyl, and commercially available derivatives such as Sandoray 1000™ (Sandoz Chemicals, Inc., Charlotte, NC); quinones such as the benzoquinones, anthraquinone and their substituted derivatives; thioxanthones such as 2-isopropylthioxanthone and 2-dodecylthioxanthone; and certain chromophore-substituted halomethyl-symtriazines such as 2,4-bis-(trichloromethyl)-6-(3',4'-dimethoxyphenyl)-sym-triazine. Photoactive crosslinking agents that are preferred because (1) they are particularly effective in bringing about rapid gelation of the adhesive composition on application of radiation, (2) of their low vapor pressure, and (3) of their thermal stability, are polyfunctional benzophenones (that is, compounds having an aliphatic, aromatic, nitrogenous, silicic, and hetero atomic nuclei to which two to four benzoylphenoxy groups are attached). Examples of such compounds include:

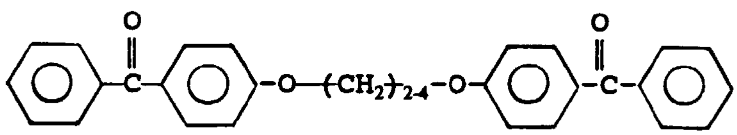

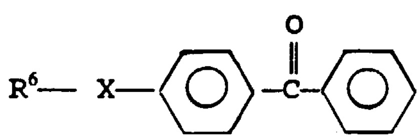

in which $R^6$ is hydrogen or an alkyl group having 1 to 18 carbon atoms; and X is -O-,

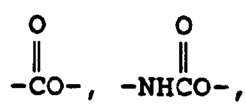

or $-CH_2-$;

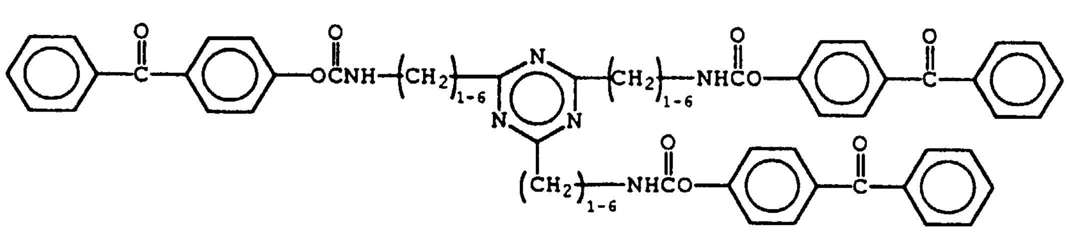

and

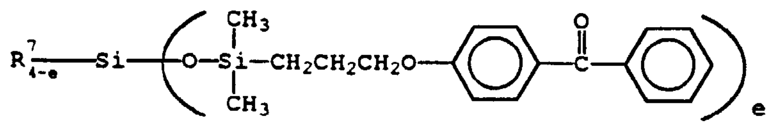

in which $R^7$ is an alkyl group having 1 to 18 carbon atoms and e is the integer 2, 3, or 4.

The concentration of photoactive crosslinking agent that can be present is in the range of 0.05 to 6.0, preferably 0.1 to 2 percent by weight of the curable copolymer, and more preferably 0.5 to 1.5 percent by weight.

The adhesive composition of the present invention can be coated from solution by any of the various coating processes well known in the art, such as knife coating, roll coating, gravure coating, curtain coating, etc. Useful coating thicknesses for the present invention are in the range of 0.5 to 15 mg/$cm^2$, preferably in the range of 2.0 to 7.0 mg/$cm^2$. Furthermore, some of the compositions of the invention can be applied by various extrusion coating processes with no solvent present, thereby eliminating environmental and toxicity problems associated with solution coating processes.

The adhesive composition can be cured using a source of actinic radiation of sufficient energy (i.e., wavelength range) to generate free radicals when incident upon the particular photoactive crosslinking agent selected for use in the composition. The preferable wavelength range for the photoactive crosslinking agents disclosed above is 400 to 250 nm. The radiant energy in this preferred range of wavelengths required to crosslink the adhesive film of the invention is 100 to 1500 millijoules/$cm^2$ and more preferably 200 to 800 millijoules/$cm^2$. Details of the photocure process are disclosed in U.S. Patent Nos. 4,181,752 and 4,329,384. Because the adhesive composition of the present invention contains a polymer, the pre-polymerization (i.e., the making of a syrup) step disclosed in the '752 and '384 patents is not required and is omitted in photocuring the compositions of the present invention.

The adhesive composition, can also be cured using electron beam (E-beam) radiation. The preferred dosage required to crosslink the adhesive film of the invention is from 1 to 20 megrads (Mrads) (i.e. 10 to 200 J/g), preferably from 2 to 10 Mrads (i.e., 20 to 100 J/g). Details of suitable process for E-beam curing substrates that have been coated with adhesive composition of the invention can be found in U.S. Patent No. 4,533,566.

The crosslinked adhesive films preferably have a get content in the range of from 2 to 95 weight percent, more preferably from 30 to 80 weight percent, and most preferably from 50 to 70 weight percent when the get content has been corrected for soluble tackifying resins and other additives as hereinafter described.

The crosslinking agent can extract tertiary hydrogen and allows open-bonded segments to join and form a crosslinked polymer. Where the crosslinking agent is polyfunctional, it can extract tertiary hydrogen at more than one site and can become incorporated into the polymer by forming a linking group in the polymer.

Addition of one or more tackifying resins to the inventive composition can provide a PSA having improved tack, lower melt viscosity, improved coatability, good heat stability, and improved peel adhesion. Shear adhesion of the tackified compositions can be enhanced by radiation cure with no loss of peel adhesion. High internal strength of the adhesive is necessary in box sealing tapes and masking applications in the automotive industry.

Compatible tackifying resins useful in the radiation curable adhesive compositions of the invention include resins derived by polymerization of unsaturated hydrocarbon monomers, having five to nine carbon atoms, polyterpenes, synthetic polyterpenes, and the like. Hydrocarbon tackifying resins can be prepared by polymerization of monomers consisting primarily of olefins and diolefins and include, for example, residual by-product monomers of the isoprene manufacturing process. These hydrocarbon tackifying resins typically exhibit Ball and Ring Softening Points of from about 80°C to about 145°C; Acid Numbers of from about 0 to 2, and Saponification values of less than one. Examples of such commercially available resins based on a $C_5$ olefin fraction of this type are Wingtack™ 95 and Wingtack™ 115 (Wingtack Plus) tackifying resins available from Goodyear Tire and Rubber Co. Other hydrocarbon resins include Regalrez™ 1078 and Regalrez™ 1126 tackifying resins available from Hercules Chemical Co. Inc., Wilmington, DE; Arkon resins, such as Arkon™ P115 tackifying resin, available from Arakawa Forest Chemical Industries, Chicago, IL; and Escorez™ resins available from Exxon Chemical Company.

Other suitable tackifying resins include the terpene polymers, such as polymeric resinous materials obtained by polymerization and/or copolymerization of terpene hydrocarbons such as the alicyclic, mono, and bicyclic monoterpenes and their mixtures, including carene, isomerized pinene, terpinene, terpentene, and various other terpenes. Commercially available resins of the terpene type include the Zonarez™ terpene B-series and 7000 series tackifying resins available from the Arizona Chemical Corp., Wayne, NJ. Typical properties reported for the Zonarez™ terpene resins include Ball and Ring Softening Points of about 55°C to 125°C (ASTM E28-67), Acid Numbers of less than one (ASTM D465-59) and Saponification Numbers of less than one (ASTM D464-59). The terpene resin used in examples below is a poly(beta-pinene) resin, Piccolyte™ A115 resin available from Hercules Chemical Co. Inc., which has a Ball

and Ring Softening Point of 115°C, and Acid Number of one, and Iodine Number of 190.

Where stability at elevated temperatures is needed, saturated tackifying resins are used.

The total amount of optionally present tackifying resins in the composition is more than 0 to 150 parts by weight, more preferably 5 to 50 parts, and most preferably 25 to 35 parts by weight per 100 parts of polymer by weight. Saturated tackifying resins such as Regalrez™ 1078 resin and Arkon" P115 resin are preferred because they yield a higher get content than upon equivalent treatment by an activated crosslinking agent.

The radiation-cured saturated polyolefin pressure-sensitive adhesive of the invention is prepared by a method comprising the steps of:

a) providing a composition comprising

1) a copolymer having general formula I,
2) an effective amount of a photoactive crosslinking agent,
3) optionally a tackifying agent, which preferably is a saturated tackifying agent;

b) coating the composition onto a substrate;
c) exposing the coated composition to actinic or E-beam radiation to effect crosslinking of the composition and provide said radiationcured pressure-sensitive adhesive.

Minor amounts of additives can also be included in the composition to provide adhesives for special end uses. Such additives may include pigments, dyes, plasticizers, fillers, stabilizers, ultraviolet absorbers, anti-oxidants, processing oils, and the like. Amount of additives used can vary from 0.1 to 50 weight percent depending on the end use desired.

The adhesive composition of the present invention can be coated onto a wide range of substrate materials, examples being polymeric supports such as polyethylene terephthalate (PET) (Dupont Chemical Co., Wilmington, DE), and biaxially oriented polypropylene (BOPP) (Toray Chemical Co., Ltd., Tokyo, Japan, or Mobil Oil Co.; woven and non-woven fabrics, metals and metal foils such as aluminum, copper, lead, gold, and the like; paper; glass; ceramics; and composite materials comprised of laminates of one or more of these materials. Pressure sensitive adhesive tapes and transfer films are preferred articles of the invention.

Another embodiment of the invention comprises a laminated structure of at least a first and a second substrate such as polyethylene and polypropylene, the substrates being joined by a layer of the adhesive composition of the invention. At least one of the substrates is capable of transmitting actinic or electron beam radiation so that the adhesive layer may be cured.

In some applications primers may be useful for improving the adhesion of the adhesive to some substrates. Useful primers for the practice of the present invention include a triblock copolymer of styrene-ethylene/butylene-styrene grafted with maleic anhydride (Kraton™ G-1901X copolymer, Shell Chemical Co.) and a combination of amorphous polypropylene and Kraton™ G1901X copolymer. Release liners (such as described in U.S. Patent Nos. 4,386,135, 3,957,724, and 2,532,011) form a special class of substrates on which the composition of the invention can be coated and subsequently radiation cured to form adhesive transfer films.

<u>Test Methods:</u>

The test procedures used in the examples to evaluate and compare the properties of the PSA compositions and tapes made from them are industry standard tests. These tests are described in detail in various publications of the American Society for Testing Materials (ASTM), Philadelphia, PA and the Pressure Sensitive Tape Council (PSTC), Glenview, IL. References to these standards are also given.

<u>Shear Strength (ASTM D-2654-78; PSTC - 7)</u>

The shear strength is a measure of the cohesiveness or internal strength of an adhesive. It is based upon the amount of force required to pull an adhesive strip from a standard flat surface in a direction parallel to the surface to which it has been affixed with a definite pressure. It is measured in units of time (minutes) required to pull a standard area of PSA coated sheet material from a stainless steel test panel under stress of a constant, standard load.

The tests were conducted on adhesive coated strips applied to a stainless steel panel such that a 12.7 mm by 12.7 mm portion of each strip was in firm contact with the panel with one end portion of the tape being free. The panel with coated strip attached was held in a rack such that the coated surface of the panel forms an angle of 182° with the vertical tape free end which is then tensioned by application of a force of one kilogram applied as a hanging weight from the free end of the coated strip. The 2° greater than 180° is used to negate peel forces, thus ensuring that only the shear forces are measured in order to more accurately determine the holding power of the tape being tested.

Time elapsed for each test specimen to separate from the steel panel is recorded as the shear strength.

Mode of Failure (MOF)

The time at which the mass falls is called "Shear Test" and is reported as "1000+" if the tape has not failed after 5000 minutes. With each Shear is indicated the mode of failure as follows:

PP = pop-off, i.e., 75-100% adhesive failure from steel plate;
Sp = adhesive split: both surfaces completely covered by adhesive.

The pop-off failure mode is preferred because it is indicative of adhesive failure of the adhesive/steel interfacial bond as opposed to cohesive failure of the adhesive. Adhesives of various shear adhesions, all within the range of the present invention (1-1,000 minutes), are preferred depending on end-use applications.
Two specimens of each tape were tested and the shear tests were averaged to obtain the shear value.

Peel Adhesion (ASTM D 3330-78; PSTC - 1 (11/75))

The peel adhesion is the force required to remove a PSA coated test specimen from a test panel measured at a specific angle and rate of removal. In the examples, this force is expressed in Newtons per decimeter (N/dm) width of coated sheet. The procedure followed is:

1) A test specimen 25.4 mm wide is applied to a horizontally positioned clean glass test plate. A 2.2 kg rubber roller is used to press a 12.7 cm length of specimen into firm contact with the glass surface.
2) The free end of the specimen is doubled back nearly touching itself so the angle of removal is 180°. The free end is attached to the adhesion tester scale.
3) The glass test plate is clamped in the jaws of tensile testing machine which is capable of moving the plate away from the scale at a constant rate of 2.3 meters per minute.
4) The scale reading in Newtons is recorded as the tape is peeled from the glass surface.

Inherent Viscosity (ASTM D 2857-70 (Reapproved 1977))

In order to understand the benefits derived from the teaching of this invention, it is necessary to relate the improvements in shear strength and processability to the molecular weight of the polymeric component of the PSA. The inherent viscosity of 10 ml of 0.5 g/dl polymer solution is measured using a Cannon-Fenske #50 viscometer (available from Cannon Instruments Co., State College, PA) in a water bath controlled at 25°C. The solvent used is specified in the examples.

Percent Get Test (ASTM D 2616-81)

The percent get is used as an indication of cure level. The tapes containing tackifying resins are corrected to the actual percent gel. The corrected percent get is 100 times the gelled mass divided by the total mass of material that is capable of forming a gelled network. Soluble materials such as tackifiers and uncrosslinked polymers are extracted before determining the get fraction.
Crosslinking by actinic radiation or E-beam improves the creep and shear resistance of pressure-sensitive adhesives.
Many important properties of crosslinked pressure-sensitive adhesives vary with the get content. Hence, determination of the get content provides a means for controlling the process and thereby raising the quality of the tape.
Extraction tests permit verification of the proper get content of polyolefin PSAs and they also permit comparison between different crosslinked adhesives and their specific end uses.

Get Content Determination:

A square test specimen (3.81 cm x 3.81 cm) containing approximately 0.06 g of PSA is cut from a tape and placed in a 120-mesh (approximately 126 μm openings) stainless steel basket measuring approximately 4 x 8 cm. The contents are weighted to the nearest 0.1 mg and then immersed in a capped beaker containing sufficient toluene to cover the specimen. After extraction for 24 to 48 hours, the basket (containing the specimen) is removed, drained, and placed in an oven at 69°C. The basket and specimens are dried to a constant weight and the get content is determined as follows:

$$\text{Extract \%} = \frac{\text{Weight lost during extraction}}{\text{Weight of original specimen}} \times 100$$

$$\text{Get content} = 100 - \text{Extract \%}$$

For the tackified pressure-sensitive adhesive tapes, the weight of the tackifier resin was subtracted before calculating the corrected get content as follows:

$$\text{Percent extract(\%)} = \frac{\text{Weight lost during extraction}}{\text{Weight of final specimen - weight of resin}} \times 100$$

$$\text{Corrected gel content} = 100 - \text{percent extract}$$

Two specimens of each tape were tested and the results were averaged to obtain the get content value.

Panel Test

This test is used to evaluate the effectiveness of the adhesive for use as a masking tape at elevated temperatures. Used in this test is an aluminum panel, the test surface of which has a paint to which masking tapes have been adhered, e.g., an automotive basecoat/clearcoat (BC/cc) acrylic enamel paint system or the automotive 50J™ acrylic enamel paint of Ford Motor Co.

Tapes were adhered at room temperature to the test surface, followed by two passes of a 4.5-pound (2-kg) rubber-coated metal roller. After one hour in an air-circulating oven at either 121°C or 150°C, the tape was peeled back while hot at an angle of 45°C at an approximate rate of 1.9 m/min across half of the panel. After cooling to room temperature, the tape was peeled from the other half of the panel. The panel was examined visually for any adhesive residue.

## Examples

Preparation of Copolymer 1

The following reactants were charged in the order mentioned to a dry, argon filled, circulating water jacketed glass reactor equipped with stirrer and condenser: 474 grams 1-hexene, 1971 grams of toluene, 18.75 grams 4-methyl-1-pentene (which had been passed through alumina/silica to remove impurities and then dried over molecular sieves), and 2.7 ml of diethylaluminum chloride (1.8 M in toluene). The copolymerization was initiated by the addition of 0.5 g $AATiCl_3$ (aluminum activated reduced titanium chloride, Stauffer Catalyst). The molecular weight of copolymer was controlled by passing hydrogen at 60 cc/min throughout the reaction period. The reaction was maintained at 25°C during the course of the reaction. After 3 hours of the reaction, the copolymerization was quenched and the polymer precipitated in a large excess of methanol to extract the catalyst residues. The methanol solution was then decanted off of the polymer precipitate. The copolymer was stabilized with 0.25 weight % Irganox 1010 antioxidant (available from Ciba Geigy) and dried in a vacuum oven at 70-80°C.

There was obtained 320 g (65% conversion) of copolymer having by NMR analysis 1.5 mol percent of 4-methylpentene units and 98.5 mol percent of 1-hexene units. It had an inherent viscosity (IV) of 2.0 dl/g at 0.5 g/dl concentration in hexane at 25°C and a glass transition temperature (Tg) of -44°C. No crystallinity was detected by differential scanning colorimetry (DSC) analysis.

Preparation of Copolymer 2

The procedure for the preparation of copolymer 1 was repeated with the exception that a different monomer ratio was used (419 grams of 1-hexene and 74 grams of 4-methylpentene). The copolymerization was run at 50°C for one hour. A tacky amorphous copolymer was obtained in 50% conversion having an IV of 1.5 dl/g and a Tg of -38°C. The copolymer contained 6.2 mole percent of 4-methylpentene.

Preparation of Copolymer 3

The procedure for the preparation of copolymer 1 was repeated with the exception that 150 g 1-octene and

12.5 g of 4-methylpentene were used. A tacky amorphous copolymer was obtained in 60% conversion having an IV of 2.3 dl/g, a Tg of -59°C, and 1.7 mole percent of 4-methylpentene.

Preparation of Copolymer 4

The procedure for the preparation of copolymer 1 was repeated with the exception that 1-decene and 4-methyl-1-pentene were used (150 g of 1-decene and 10 g of 4-methylpentene). A tacky amorphous copolymer was obtained in 65% conversion having an IV of 1.9 dl/g. The copolymer contained 3.0 mole percent of 4-methylpentene.

Examples 1-18

Solutions in toluene of each of Copolymers 1, 2, 3, and 4 (radiated and unradiated), 0.15 or 1.0 weight percent of photocrosslinking agent benzophenone (B), Sandoray 1000™ crosslinker (a substituted benzophenone) (S), 2,4-bis (trichloromethyl)-6-(3,4-dimethoxyphenyl)-s-triazine (T), or 2-isopropylthioxanthane (I) were prepared as shown in TABLE I and coated, using a hand-spread coater, onto 25 micrometer (µm) polyethylene terephthalate film (PET) and dried at 80°C to remove toluene to provide an adhesive coating having a dry thickness of about 37.5 µm. The coatings containing the photocrosslinking agent were then exposed to UV radiation under nitrogen for the dose shown and the characteristics of each of the adhesive coatings was determined and is presented in TABLE I, below.

TABLE I shows that unradiated compositions of the invention were not gelled and the adhesive in tapes prepared using them failed by splitting. Compositions that were irradiated, however, were gelled from about 36 to 80% depending on the particular copolymer, the crosslinking agent and the amount of irradiation. The irradiated tapes prepared from them popped off and did not split.

TABLE I

| Ex. No. | Copolymer (Wt%) | PI (Wt%) | Dose mJ/cm$^2$ | Peel Adhesion N/dm | Shear min. | MOF | GEL (%) |
|---|---|---|---|---|---|---|---|
| 1* | 1 | -- | -- | 56 | 12 | sp | 0 |
| 2 | 1 | B(1) | 200 | 39 | 4 | po | 55 |
| 3 | 1 | S(1) | 200 | 43 | 5 | po | 61 |
| 4 | 1 | T(0.15) | 200 | 45 | 8 | po | 38 |
| 5 | 1 | D(1) | 200 | 48 | 15 | po | 65 |
| 6* | 2 | -- | -- | 57 | 4 | sp | 0 |
| 7 | 2 | B(1) | 450 | 38 | 4 | po | 47 |
| 8 | 2 | S(1) | 450 | 48 | 6 | po | 51 |
| 9 | 2 | I(1) | 450 | 51 | 10 | po | 36 |
| 10 | 2 | T(0.15) | 200 | 51 | 23 | po | 55 |
| 11* | 3 | -- | -- | 60 | 1 | sp | 0 |
| 12 | 3 | B(1) | 450 | 46 | 5 | po | 80 |
| 13 | 3 | S(1) | 450 | 45 | 5 | po | 77 |
| 14 | 3 | T(0.15) | 450 | 38 | 6 | po | 63 |
| 15* | 4 | -- | -- | 57 | 1 | sp | 0 |
| 16 | 4 | B(1) | 450 | 46 | 5 | po | 78 |
| 17 | 4 | S(1) | 450 | 52 | 5 | po | 76 |
| 18 | 4 | T(0.15) | 450 | 56 | 22 | po | 60 |

PI is photocrosslinker in which B is benzophenone;
S is Sandoray 1000™, I is 2-isopropylthioxanthone,
T is 2,4-bis-(trichloromethyl)-6-(3,4-dimethoxyphenyl)-s-triazine,
D is 1,10-bis-(4-benzoylphenoxy)decane
MOF is mode of failure in which sp is split and po is pop-off
(*) included for comparative purposes; not within scope of appended claims

TABLE II

| Ex. No. | Copolymer (Wt%) | PI (Wt%) | Dose mJ/cm$^2$ | Peel Adhesion N/dm | Shear min. | MOF | GEL (%) |
|---|---|---|---|---|---|---|---|
| 19* | 1 | -- | -- | 71 | 27 | sp | 0 |
| 20 | 1 | B(1) | 450 | 63 | 1122 | sp | 25 |
| 21 | 1 | S(1) | 900 | 62 | 597 | po | 34 |
| 22 | 1 | I(1) | 900 | 62 | 295 | po | 19 |
| 23 | 1 | T(0.15) | 200 | 64 | 198 | po | 31 |
| 24 | 1 | D(1) | 200 | 67 | 550 | po | 45 |
| 25* | 2 | -- | -- | 72(r) | 89 | sp | 0 |
| 26 | 2 | B(1) | 450 | 65 | 254 | po | 51 |
| 27 | 2 | S(1) | 900 | 70 | 237 | po | 60 |
| 28 | 2 | I(1) | 900 | 63(r) | 537 | po | 50 |
| 29 | 2 | T(0.15) | 450 | 59(r) | 950 | po | 60 |
| 30* | 4 | -- | -- | 85 | 65 | sp | 0 |
| 31 | 4 | B(1) | 450 | 73 | 72 | po | 65 |
| 32 | 4 | S(1) | 450 | 70 | 165 | po | 52 |

(I) The tackifier used is Regalrez™ 1078 (hydrocarbon tackifier available from Hercules Chemical Co.
PI is photocrosslinker in which B is benzophenone;
S is Sandoray 1000™, I is 2-isopropylthioxanthone,
T is 2,4-bis-(trichloromethyl)-6-(3,4-dimethoxyphenyl)-s-triazine,
D is 1,10-bis-(4-benzoylphenoxy)decane
MOF is mode of failure in which sp is split and po is pop-off

(*) included for comparative purposes; not within scope of appended claims

Examples 19-32

Solutions of each Copolymer 1, 2, 3, and 4 with 0.15 or 1.0 weight percent of the photocrosslinking agents B, S, I, and T and 25 weight percent of Regalrez® 1126 tackifier were prepared in toluene, coated, dried, and exposed to UV, under nitrogen for the dose shown as described for copolymers 1-4. The characteristics of each adhesive obtained is given in TABLE II.

TABLE II shows that irradiated adhesive compositions of the invention containing Regalrez™ 1078 tackifier had increased shear and peel adhesion.

Examples 33-45

Coatings prepared in previous examples were examined according to the Panel Test described previously and the results are detailed in TABLE III.

TABLE III shows that masking tapes prepared using the non-tackified adhesive compositions (Exs. 33-42) and the tackified adhesive compositions (Exs. 43-45) left little, if any, residue in panel tests when irradiated with greater than 450 mJ/cm$^2$ of UV radiation.

TABLE III

| Panel Tests | | | | | |
|---|---|---|---|---|---|
| Ex. No. | Adhesive Sample No. | % Residue left on BC/CC panel after 60 min. at | | % Residue left on 50J panel after 60 min. at | |
| | | 121°C | 150°C | 121°C | 150°C |
| 33* | 1 | 100 | 100 | 100 | 100 |
| 34 | 2 | 5 | 10 | 10 | 10 |
| 35 | 2a | 0 | 2 | 0 | 0 |
| 36* | 6 | 100 | 100 | 100 | 100 |
| 37 | 7a | 0 | 3 | 0 | 1 |
| 38* | 11 | 95 | 100 | 100 | 100 |
| 39 | 12 | 5 | 5 | 7 | 10 |
| 40 | 12a | 0 | 0 | 0 | 0 |
| 41* | 15 | 75 | 100 | 90 | 100 |
| 42 | 16 | 5 | 10 | 0 | 10 |
| 43* | 19 | 100 | 95 | 100 | 100 |
| 44 | 20 | 10 | 50 | 10 | 25 |
| 45 | 20a | 2 | 0 | 0 | 5 |

2a is same as 2 except that it was exposed to 450 mJ/cm$^2$
7a is same as 7 except that it was exposed to 1200 mJ/cm$^2$
12a is same as 12 except that it was exposed to 1200 mJ/cm$^2$
20a is same as 20 except that it was exposed to 1200 mJ/cm$^2$
(*) included for comparative purposes; not within scope of appended claims

Example 46

A one-liter reaction vessel equipped with mechanical stirrer was dried overnight at 110°C and charged with: 450 ml distilled toluene; 200 ml 1-hexene; 25 g 4-methylpentene-1; and 1 ml of 1.8 molar $(C_2H_5)_2AlCl$ in toluene. After bubbling $H_2$ through the stirred solution for one hour, 0.15 g of $TiCl_3$ was added. The reaction mixture was allowed to react under these conditions until a slight but significant increase in viscosity was visually observed (about 45 minutes).

Then ethylene gas was introduced to the reaction vessel atmosphere. After 2 hours ethylene was bubbled through the reaction mixture for 3 additional hours before quenching with methanol. The product was a pressure-sensitive adhesive containing 5 mole % of ethylene.

The copolymer solution was blended with 15 weight percent Arkon P115 and 1% by weight benzophenone

photoinitiator and coated on 0.04 mm thick (1.5 mil) poly(ethylene terephthlate) followed by UV curing. The cured adhesive had a peel strength of 30 N/dm and shear strength of 1320 min as compared to uncured adhesive of the same composition having a peel strength of 30 N/dm and shear strength of 32 minutes.

Various modifications and alterations of this invention will become apparent to those skilled in the art without departing from the scope and spirit of this invention, and it should be understood that this invention is not to be unduly limited to the illustrative embodiments set forth herein.

## Claims

**1.** A composition comprising:

a) at least one copolymer of

1) 90.1 to 99.9 mole percent of one or more straight chain $\alpha$-olefins having 2 to 32 carbon atoms of which at least 70% have 6 to 10 carbon atoms, and
2) 9.9 to 0.1 mole percent of one or more $\alpha$-olefins having 6 to 32 carbon atoms including at least one methylidyne group present in a branched or cyclic group of carbon atoms;

wherein the copolymer has the general formula:

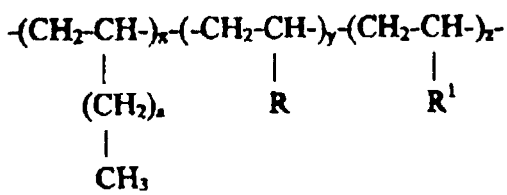

wherein

x, y, and z are numbers designating the relative molar amounts of monomer units comprising the backbone chain of the copolymer such that

(1) the sum (x + y + z) is 35 to 400,000, and
(2) z is 0.1 to 9.9%, y is 0 to 30%, and x is 64 to 99.9% of the sum (x + y + z);

a is an integer from 3 to 7, inclusive;
R is hydrogen or an alkyl group having 1 to 3 carbon atoms ; and
$R^1$ is a monovalent organic group, having the structure

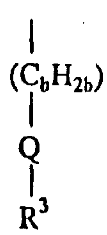

wherein

b is an integer from 1 to 5,
Q is a single bond, oxygen, or a divalent group selected from the class consisting of an arylene group having 6 to 15 carbon atoms and

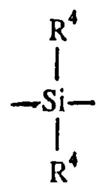

in which each $R^4$ is independently an alkyl group of 1 to 4 carbon atoms or $R^3$; and $R^3$ is a methylidyne group having the formula

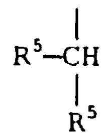

in which

(1) each $R^5$ is independently an alkyl group having 1 to 4 carbon atoms or
(2) both $R^5$s together provide an alkylene group that, with the methylidyne carbon to which they are attached, forms a 5- or 6-membered ring of carbon atoms,

with the proviso that b can be zero when Q is an arylene group;
b) sufficient photoactive crosslinking agent to crosslink said composition upon exposure to actinic radiation; and
c) optionally, a tackifying resin,

said composition being radiation curable to a pressure sensitive adhesive having peel adhesion of at least 35 N/dm when measured in accordance with ASTM D 3330-78 both in the presence and absence of said tackifying resin.

**2.** The composition according to claim 1 wherein said copolymer has a glass transition temperature from -70° to 0°C.

**3.** The composition according to claim 1 or 2 wherein said copolymer has an inherent viscosity from 0.4 to 9.0 dl/g.

**4.** The composition according to any of claims 1 to 3 wherein said copolymer has a number average molecular weight from 5,000 to 50,000,000.

**5.** The E-beam or actinic radiation cured composition of any of claims 1 to 4.

**6.** An article comprising a layer of the cured composition of claim 5 on at least one surface of at least one substrate.

**7.** The article according to claim 6 wherein said substrate is selected from the group consisting of a polymeric layer, a fabric, a metal, paper, glass, ceramic, and a laminate of these materials.

**8.** The article according to claims 6 or 7 which is a tape, a laminated structure, or an adhesive transfer film.

**9.** The tape according to claim 8 wherein said cured composition comprises the reaction product of ethylene, 1-hexene, and 4-methylpentene-1.

**10.** A method of preparing a radiation-cured saturated polyolefin pressure-sensitive adhesive comprising the steps of:

a) providing a curable composition comprising a copolymer according to any of claims 1 to 4, and an effective amount of a photoactive crosslinking agent,
b) coating the composition onto a substrate,
c) exposing the coated composition to actinic or E-beam radiation to effect crosslinking of the composition and provide said radiation-cured pressure-sensitive adhesive,

with the proviso that when the crosslinking is effected by actinic radiation there is present an effective amount of photoactive crosslinking agent.

## Patentansprüche

**1.** Zusammensetzung, umfassend:

(a) mindestens ein Copolymer aus

(1) 90,1 ... 99,9 Molprozent eines oder mehrerer geradkettiger α-Olefine mit 2 ... 32 Kohlenstoffatomen, von denen mindestens 70 % 6 bis 10 Kohlenstoffatome aufweisen, und
(2) 9,9 ... 0,1 Molprozent eines oder mehrerer α-Olefine mit 6 ... 32 Kohlenstoffatomen, einschließend mindestens eine Methylidin-Gruppe, die in einer verzweigten oder cyclischen Gruppe von Kohlenstoffatomen vorhanden ist;

wobei das Copolymer die allgemeine Formel hat:

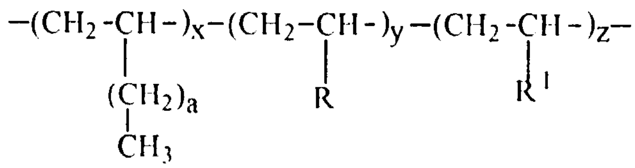

worin sind:

x, y und z Zahlen, die die relativen Molmengen der Monomereinheiten angeben, die die Hauptkette des Copolymers ausmachen derart, daß

(1) die Summe (x+y+z) 35 ... 400.000 beträgt,
(2) z 0,1 ... 9,9 % ist, y Null ... 30 % ist und x 64 ... 99,9 % der Summe von (x+y+z) ist;

a ist eine ganze Zahl von 3 ... 7 einschließlich;
R ist Wasserstoff oder eine Alkyl-Gruppe mit 1 ... 3 Kohlenstoffatomen, und
$R^1$ ist eine einwertige organische Gruppe mit der Struktur:

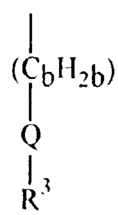

worin sind:

b eine ganze Zahl von 1 ... 5,
Q eine Einfachbindung, Sauerstoff oder eine zweiwertige Gruppe, ausgewählt aus der Klasse, bestehend aus einer Arylen-Gruppe mit 6 ... 15 Kohlenstoffatomen und

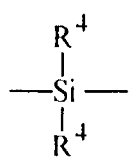

worin jedes $R^4$ unabhängig eine Alkyl-Gruppe mit 1... 4 Kohlenstoffatomen oder $R^3$ ist, und $R^3$ eine Methylidin-Gruppe der Formel ist

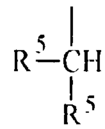

worin

(1) jedes $R^5$ unabhängig eine Alkyl-Gruppe mit 1 ... 4 Kohlenstoffatomen ist oder
(2) beide $R^5$ gemeinsam eine Akylen-Gruppe bereitstellen, die mit dem Methylidin-Kohlenstoff, an dem sie sich befinden, einen 5- oder 6-gliedrigen Ring von Kohlenstoffatomen bilden unter der Voraussetzung, daß b Null sein kann, wenn Q eine Arylen-Gruppe ist;

(b) ausreichend photoaktives Vernetzungsmittel zum Vernetzen der Zusammensetzung bei Exponierung an aktinischer Strahlung; sowie
(c) wahlweise ein klebrigmachendes Harz,

wobei die Zusammensetzung zu einem Haftklebstoff strahlungshärtbar ist, der eine Schälfestigkeit von mindestens 35 N/dm hat, wenn sowohl bei Vorhandensein als auch bei Abwesenheit des klebrigmachenden Harzes nach ASTM D 3330-78 gemessen wird.

**2.** Zusammensetzung nach Anspruch 1, bei welcher das Copolymer eine Glasübergangstemperatur von -70 °C ... Null Grad Celsius hat.

**3.** Zusammensetzung nach Anspruch 1 oder 2, bei welcher das Copolymer eine logarithmische Viskositätszahl von 0,4 ... 9,0 dl/g hat.

**4.** Zusammensetzung nach einem der Ansprüche 1 bis 3, bei welcher das Copolymer eine zahlengemittelte relative Molekülmasse von 5.000 ... 50.000.000 hat.

**5.** Zusammensetzung nach einem der Ansprüche 1 bis 4, gehärtet mit Elektronenstrahlung oder aktinischer Strahlung.

**6.** Artikel, der eine Schicht des gehärteten Klebstoffes nach Anspruch 5 auf mindestens einer Oberfläche mindestens eines Substrats aufweist.

**7.** Artikel nach Anspruch 6, bei welchem das Substrat ausgewählt ist aus der Gruppe, bestehend aus einer polymeren Schicht, einem textilen Flächengebilde, einem Metall, Papier, Glas, Keramik und einem Schichtstoff aus diesen Materialien.

**8.** Artikel nach Anspruch 6 oder 7, der ein Band ist, eine Schichtstoffstruktur oder eine Klebstofftransferfolie.

**9.** Band nach Anspruch 8, bei welchem die gehärtete Zusammensetzung das Reaktionsprodukt von Ethylen, 1-Hexen und 4-Methylpenten-1 aufweist.

**10.** Verfahren zum Herstellen eines strahlungsgehärteten, Haftklebstoffes aus gesättigtem Polyolefin, umfassend die Schritte:

(a) Bereitstellen einer härtbaren Zusammensetzung, die ein Copolymer nach einem der Ansprüche 1 bis 4 und eine wirksame Menge eines photoaktiven Vernetzungsmittels aufweist;
(b) Auftragen der Zusammensetzung auf ein Substrat;
(c) Exponieren der aufgetragenen Zusammensetzung an aktinischer Strahlung oder Elektronenstrahlung,

um das Vernetzen der Zusammensetzung herbeizuführen und den strahlungsgehärteten Haftklebstoff zu

schaffen, unter der Voraussetzung, daß eine wirksame Menge eines photoaktiven Vernetzungsmittels vorhanden ist, wenn das Vernetzen durch aktinische Strahlung erfolgt.

## Revendications

**1.** Composition qui comprend :

a) au moins un copolymère de

1) 90.1 à 99.9 % en moles d'une ou plusieurs α-oléfines à chaine linéaire ayant 2 à 32 atomes de carbone, dont au moins 70 % ont de 6 à 10 atomes de carbone, et
2) 9,9 à 0,1 % en moles d'une ou plusieurs α-oléfines ayant 6 à 32 atomes de carbone, englobant au moins un groupe méthylidyne présent dans un groupe ramifié ou cyclique d'atomes de carbone ;

le copolymère ayant la formule générale :

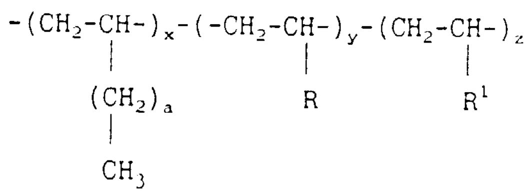

dans laquelle

x, y et z sont des nombres indiquant les quantités molaires relatives des motifs monomères constituant la chaîne du squelette du copolymère de telle sorte que

(1) la somme (x + y + z) vaut de 35 à 400.000, et
(2) z vaut de 0,1 à 9.9 %, y vaut de 0 à 30 % et x vaut de 64 à 99.9 % de la somme (x + y + z) ;

a représente un nombre entier valant de 3 à 7, bornes incluses ;
R représente un atome d'hydrogène ou un groupe alkyle ayant 1 à 3 atomes de carbone ; et
$R^1$ représente un groupe organique monovalent ayant la structure :

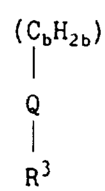

dans laquelle

b est un nombre entier valant de 1 à 5,
Q est une liaison simple, un atome d'oxygène ou un groupe divalent choisi dans le groupe comprenant un groupe arylène ayant 6 à 15 atomes de carbone et

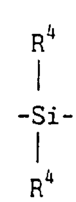

où chaque $R^4$ représente indépendamment un groupe alkyle ayant 1 à 4 atomes de carbone ou $R^3$ ; et $R^3$ est un groupe méthylidyne répondant à la formule

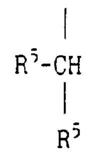

dans laquelle

(1) chaque $R^5$ représente indépendamment un groupe alkyle ayant 1 à 4 atomes de carbone ou
(2) les deux $R^5$ fournissent ensemble un groupe alkylène qui, avec le carbone méthylidyne auquel ils sont fixés, forme un cycle à 5 ou 6 chaînons d'atomes de carbone,

étant entendu que b peut être zéro lorsque Q représente un groupe arylène ;

b) un agent de réticulation photoactif suffisant pour réticuler ladite composition par exposition à un rayonnement actinique; et

c) éventuellement une résine tackifiante,

ladite composition étant durcissable par rayonnement en un auto-adhésif ayant une adhérence à l'arrachement d'au moins 35 N/dm, lorsqu'elle est mesurée conformément à ASTM D 3330-78, à la fois en présence et en l'absence de ladite résine tackifiante.

**2.** Composition selon la revendication 1, dans laquelle ledit copolymère possède une température de transition vitreuse de -70°C à 0°C.

**3.** Composition selon la revendication 1 ou 2, dans laquelle ledit copolymère possède une viscosité inhérente de 0,4 à 9,0 dl/g.

**4.** Composition selon l'une quelconque des revendications 1 à 3, dans laquelle ledit copolymère possède une masse moléculaire moyenne en nombre de 5.000 à 50.000.000.

**5.** Composition durcie par rayonnement actinique ou faisceau d'électrons selon l'une quelconque des revendications 1 à 4.

**6.** Article qui comprend une couche de la composition durcie selon la revendication 5, sur au moins une surface d'au moins un support.

**7.** Article selon la revendication 6, dans lequel ledit support est choisi dans le groupe comprenant une couche polymère, un tissu, un métal, du papier, du verre, une matière céramique et un stratifié de ces matériaux.

**8.** Article selon la revendication 6 ou 7, qui est un ruban, une structure stratifiée ou un film de transfert d'adhésif.

**9.** Ruban selon la revendication 8, dans lequel ladite composition durcie comprend le produit de la réaction de l'éthylène, du 1-hexène et du 4-méthylpentène-1.

**10.** Procédé de préparation d'un auto-adhésif à base de polyoléfine saturée durcie par rayonnement, qui comprend les étapes qui consistent à :

a) fournir une composition durcissable comprenant un copolymère selon l'une quelconque des revendications 1 à 4 et une quantité efficace d'un agent de réticulation photoactif,

b) étaler la composition sur un support,

c) exposer la composition enduite à un rayonnement actinique ou de faisceau d'électrons pour réaliser la réticulation de la composition et fournir ledit auto-adhésif durci par rayonnement, étant entendu que lorsque l'on réalise la réticulation par rayonnement actinique, on se trouve en présence d'une quantité efficace d'agent de réticulation photoactif.